# EUROPEAN PATENT APPLICATION

(11) **EP 4 521 579 A1**
(43) Date of publication of application: **12.03.2025**
(21) Application number: 23195303.5
(22) Date of filing: 05.09.2023
(51) Int. Cl.: H02J 1/14, B60H 1/00, B60L 1/00, B60H 1/32

(54) **POWER MANAGEMENT OF A VEHICLE**

(71) Applicant: VOLVO TRUCK CORPORATION, 405 08 Göteborg (SE)
(72) Inventor: WEDDING, Christoffer, 416 72 Göteborg (SE); NORDHOLM, Linus, 436 40 Göteborg (SE); JIANG, Bincheng, 412 52 Göteborg (SE)
(74) Representative: Valea AB

(57) **Abstract**

A computer system (700) comprising processing circuitry (702) configured to handle power management of a vehicle (1) is provided. The vehicle (1) comprises a power source (10) arranged to supply power via a Power Take-Off interface (32) to a first equipment (21). The computer system (700) is configured to obtain a power management condition indicative of power availability and/or usage of power associated with the power source (10) for a first period of time. The computer system (700) is configured to produce a first cost function indicative of the power management condition during the first period of time. The computer system (700) is configured to provide the first cost function to the first equipment (21).

## Description

### TECHNICAL FIELD

The disclosure relates generally to power management of a vehicle. In particular aspects, the disclosure relates to power management of a vehicle wherein the vehicle supplies power from a power source via a Power Take-Off (PTO) interface to an equipment. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

To power equipment such as a refrigeration unit, concrete mixer, and/or a pump connected to and/or mounted to a vehicle, PTO is commonly used. The equipment can be powered by the vehicle mechanically or electrically, however typically a torque is supplied as a power source using PTO. For example, the vehicle may drive a shaft which is connected to the equipment as part of the PTO.

When using PTO, a power source may be shared by internal usages of the vehicle, or it may need to be shared by multiple equipment. The internal usages may be any one or more out of power consumption of others motors, pumps, fans, heaters, chillers, valves gearboxes, air pumps, enabling the vehicle to provide propulsion and driver comfort during a mission including but not limited to external energy transfer and driving.

Hence, a problem may occur that power from the power source is scarce and usage by an equipment may lead to straining the power source and/or that the power source is not able to provide enough power to an equipment or for internal usage of the vehicle. An additional problem is high wear caused by excessive power usage.

Therefore, there is a strive to develop further improved technology relating to power management of a vehicle.

### SUMMARY

According to a first aspect of the disclosure, a computer system comprising processing circuitry configured to handle power management of a vehicle is provided. The vehicle comprises a power source arranged to supply power via a PTO interface to a first equipment.

The computer system is further configured to obtain a power management condition indicative of power availability and/or usage of power associated with the power source for a first period of time.

The computer system is further configured to produce a first cost function indicative of the power management condition during the first period of time.

The computer system is further configured to provide the first cost function to the first equipment.

The first aspect of the disclosure may seek to improve power efficiency for PTO.

A technical benefit may include improved power efficiency. This is since due to providing, e.g., transmitting, the first cost function to the first equipment, the first equipment can react to the indicated power management condition during the first period of time. For example, if the power management condition indicates that the power of the power source is scarce during the first time period, the first equipment can schedule an operation which uses the power of the power source at a different time, e.g., before or after the first time period.

In other words, the first equipment is informed, and in some examples requested, that it is beneficial to shift a power usage of the first equipment to a time where it is more beneficial for the power source. Thereby a higher system efficiency is achieved.

Optionally in some examples, including in at least one preferred example, the processing circuitry is further configured to produce the first cost function based on an expected adjustment in vehicle functionality caused by supplying power and/or energy from the power source to the first equipment via the PTO interface during the first period of time.

A technical benefit may include improved power efficiency. This is since the first cost function may more accurately indicate the power management condition such that the first equipment is enabled to plan accordingly.

Optionally in some examples, including in at least one preferred example, the processing circuitry is further configured to produce the first cost function based on an expected adjustment in power and/or performance for a second equipment and/or for an internal unit of the vehicle. In these examples, the second equipment and/or the internal unit is/are powered by the power source. In these examples, the expected adjustment is caused by supplying power and/or energy from the power source to the first equipment via the PTO interface.

A technical benefit may include improved power efficiency. This is since the first cost function may more accurately indicate the power management condition such that the first equipment is enabled to plan accordingly.

Optionally in some examples, including in at least one preferred example, the processing circuitry is further configured to produce the first cost function based on a risk of exceeding a power threshold and/or energy threshold of the power source during the first period of time.

A technical benefit may include improved power efficiency. This is since the first cost function may more accurately indicate the power management condition such that the first equipment is enabled to plan accordingly.

Optionally in some examples, including in at least one preferred example, the processing circuitry is further configured to produce the first cost function based on an operation to be performed by the first equipment.

A technical benefit may include improved power efficiency. This is since the first cost function may more accurately indicate the power management condition, i.e., by also considering the effect of the operation to be performed, such that the first equipment is enabled to plan accordingly.

Optionally in some examples, including in at least one preferred example, the processing circuitry is further configured to receive a request to power the first equipment via the PTO interface, the request being indicative of a requested power and/or energy to use for an operation by the first equipment. In these examples, the processing circuitry is further configured to, based on the requested power and/or energy to use for the operation and based on the provided first cost function, for a second period of time, adapt a power management policy for the vehicle.

A technical benefit may include improved power efficiency. This is since the power management policy can be adapted to the requested power and/or energy. Furthermore, the power management policy may be adapted to how the first equipment reacted to the first cost function. For example, if the first cost function indicates scarce power availability from the power source in the first time period, and the first equipment still requests power and/or energy to use in the first time period, then it can be assumed that the first equipment will not react to future indications of power scarcity. Therefore the power management policy may be adapted such that to always have a power buffer for handling potential power requests by the first equipment.

Optionally in some examples, including in at least one preferred example, the processing circuitry is further configured to adapt the power management policy for the vehicle by predicting a power behaviour and/or energy behaviour of the first equipment for the second period of time. The prediction of the power behaviour and/or energy behaviour of the first equipment is based on the requested power and/or energy to use, and based on the provided first cost function. In these examples, the processing circuitry is further configured to adapt the power management policy based on the predicted behaviour of the first equipment for the second period of time.

A technical benefit may include improved power efficiency. This is since the power management policy can be adapted to how the first equipment is predicted to use energy and/or power. As an example the power source can be adapted to have power available during the second period of time to have sufficient power for the predicted power behaviour and/or energy behaviour of the first equipment for the second period of time.

Optionally in some examples, including in at least one preferred example, the processing circuitry is further configured to predict the power behavior and/or energy behaviour of the first equipment for the second period of time further based on an obtained urgency factor relating to the operation of the requested power and/or energy to use.

A technical benefit may include improved power efficiency. This is since the power management policy can be adapted to how the first equipment is predicted to use energy and/or power. If the urgency factor indicates that the operation is urgent, the power management policy may not need to be adapted to always assume that the first equipment will request power even if the power of the power source is scarce, as the first equipment may only do so if there is an urgent need for power, e.g., cannot be delayed or re-scheduled due to operational criticality. Additionally or alternative, if an operation is critical, the power management policy may be adapted such that operations requested with a high urgency factor, e.g., higher than a threshold, will always be able to be powered with full power from the power source.

According to a second aspect of the disclosure, a vehicle comprising the computer system according to the first aspect is provided.

The second aspect of the disclosure may seek to improve power efficiency for PTO. A technical benefit may include improved power efficiency.

Optionally in some examples, including in at least one preferred example, the vehicle comprises a power source arranged to supply power via a PTO interface to a first equipment.

Optionally in some examples, including in at least one preferred example, the first equipment is any of a fridge unit, a concrete mixer, or a pump.

Optionally in some examples, including in at least one preferred example, the power supplied by the power source via the PTO interface is electrical energy or torque.

Examples of the second aspect may be combined with the examples of the first aspect and vice versa. Advantages of the second aspect applies to the first aspect and vice versa.

According to a third aspect of the disclosure, a computer-implemented method for handling power management of a vehicle is provided. The vehicle comprises a power source arranged to supply power via a PTO interface to a first equipment

The method comprises: by a processing circuitry of a computer system, obtaining a power management condition indicative of power availability and/or usage of power associated with the power source for a first period of time.

The method further comprises: by the processing circuitry, producing a first cost function indicative of the power management condition during the first period of time.

The method further comprises: by the processing circuitry, providing the first cost function to the first equipment.

The third aspect of the disclosure may seek to improve power efficiency for PTO.

A technical benefit may include improved power efficiency. This is since due to providing the first cost function to the first equipment, the first equipment can react to the indicated power management condition during the first period of time. For example, if the power management condition indicates that the power of the power source is scarce during the first time period, the first equipment can schedule an operation which uses the power of the power source at a different time, e.g., before or after the first time period.

Optionally in some examples, including in at least one preferred example, producing the first cost function is based on any one or more out of:
- an expected adjustment in vehicle functionality caused by supplying power and/or energy from the power source to the first equipment via the PTO interface during the first period of time,
- an expected adjustment in power and/or performance for a second equipment and/or for an internal unit of the vehicle, wherein the second equipment and/or the internal unit is/are powered by the power source, and wherein the expected adjustment is caused by supplying power and/or energy from the power source to the first equipment via the PTO interface.
   - a risk of exceeding a power threshold and/or energy threshold of the power source during the first period of time, and
   - an operation to be performed by the first equipment.

Optionally in some examples, including in at least one preferred example, the method further comprises:
- by the processing circuitry, receiving a request to power the first equipment via the PTO interface, the request being indicative of a requested power and/or energy to use for an operation by the first equipment,
- by the processing circuitry, based on the requested power and/or energy to use for the operation and based on the provided first cost function, for a second period of time, adapting a power management policy for the vehicle.

Optionally in some examples, including in at least one preferred example, adapting the power management policy for the vehicle comprises:
- predicting a power and/or energy behaviour of the first equipment for the second period of time, based on the requested power and/or energy to use, and based on the provided first cost function, and
- wherein adapting the power management policy is based on the predicted behaviour of the first equipment for the second period of time.

Optionally in some examples, including in at least one preferred example, predicting the power and/or energy behaviour of the first equipment for the second period of time is further based on an obtained urgency factor relating to the operation of the requested power and/or energy to use.

Optionally in some examples, including in at least one preferred example, providing the first cost function to the first equipment triggers the first equipment to adapt a request for power and/or energy during the first time period.

A technical benefit may include improved power efficiency. This is since the first equipment adapts its request for power and/or energy based on the power management condition.

Optionally in some examples, including in at least one preferred example, providing the first cost function to the first equipment triggers the first equipment to postpone or to prepone a planned operation.

A technical benefit may include improved power efficiency. This is since the first equipment adapts its request for power and/or energy based on the power management condition. When the power management condition indicates a scarcity of power during the first time period, and the planned operation is postponed or preponed, the operation can be performed with full power without having to strain the power source.

Examples of the third aspect may be combined with the examples of the first and/or second aspects and vice versa. Advantages of the third aspects apply to the first and/or second aspects and vice versa.

According to a fourth aspect of the disclosure, a computer program product is provided. The computer program product comprises program code for performing, when executed by the processing circuitry, the method according to the third aspect.

According to a fifth aspect of the disclosure, a non-transitory computer-readable storage medium is provided. The non-transitory computer-readable storage medium comprises instructions, which when executed by the processing circuitry, cause the processing circuitry to perform the method according to the third aspect.

Examples of the fourth aspect and/or fifth aspect may be combined with the examples of any one or more out of the first aspect, the second aspect, and the third aspect, and vice versa. Advantages of the fourth aspect and/or fifth aspects apply to any one or more out of the first aspect, the second aspect, and the third aspect, and vice versa.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

**FIG. 1** is an exemplary system diagram of a vehicle according to an example.
**FIG. 2** is an exemplary flow chart of a method according to an example.
**FIG. 3** is an exemplary block diagram according to an example.
**FIG. 4** is an exemplary line diagram according to an example.
**FIG. 5** is another view of **FIG. 1****,** according to an example.
**FIG. 6** is a flow chart of an exemplary method to according to an example.
**FIG. 7** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

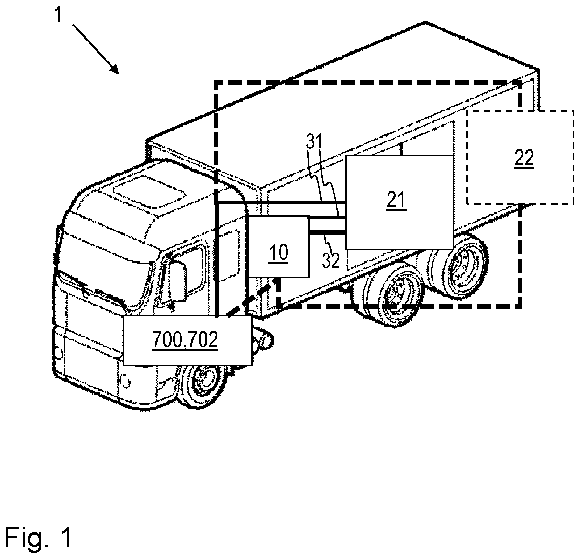

**FIG. 1** is an exemplary system diagram of a **vehicle 1** according to an example.

The vehicle 1 may be any suitable vehicle, land vehicle or marine vessel. The vehicle 1 may for example be a heavy duty vehicle such as a truck or a tractor.

The vehicle 1 may for example be a body builder vehicle, e.g., a body builder truck.

The vehicle 1 comprises, or is attached to a **power source 10.** The power source 10 may be or comprise any of: a battery, a motor, an engine, a rotating shaft, a fuel cell, a charging interface, a pump, a hydraulic source, a pneumatic source, or any other suitable power generator. When the power source 10 is a charging interface, the charging interface may be internal or external to the vehicle 1.

The vehicle 1 comprises, or is attached to, a **first equipment 21.** The first equipment 21 may be any one of: a fridge unit, a mixer, e.g. a concrete mixer, a crane, a Heating, Ventilation, and Air Conditioning (HVAC) system, a heater, a ventilation system, an air conditioning system, a hook lift, a bulk truck, a battery or energy storage system to be charged, a compressor, or a pump. The first equipment 21 may be a body builder unit. In other words, the first equipment 21 may be any suitable device which may perform one or more operations based on power supplied by the power source 10 via a **PTO interface 32.**

The PTO interface 32 may comprise any suitable power transmission interface, e.g., any of a mechanical, electrical, hydraulic, gas, or pneumatic interface. As an example, the PTO interface 32 may comprise a shaft for the first equipment 21 to attach to. The shaft may be rotated by the power source 10. Additionally or alternatively, the PTO interface 32 may comprise an electrical connector, e.g., an outlet, for the first equipment 21 to attach to. The electrical connector may supply electrical power, i.e., electricity, via the PTO interface 32 to the first equipment 21.

The power source 10 may further power a **second equipment 22.** The power source 10 may power the second equipment 22 via a second PTO interface, the PTO interface 32, or by any other means. The second equipment 22 may be any one of: a fridge unit, a mixer, e.g. a concrete mixer, a crane, a HVAC system, a heater, a ventilation system, an air conditioning system, a hook lift, a bulk truck, a compressor, a battery or energy storage system to be charged, or a pump. The second equipment 22 may be a body builder unit.

When the respective first equipment 21 and/or the second equipment 22 is a battery to be charged, the battery may be a battery of an external unit, such as for one or more trailers attached to the vehicle 1.

The power source 10 may power the first equipment 21, when the first equipment 21 requests and/or allocates power for an operation, e.g., during a specific period of time.

Additionally, the power source 10 may power the second equipment 22, when the second equipment 22 requests and/or allocates power for an operation, e.g., during a specific period of time which may overlap with power consumption of the first equipment 21.

Additionally, the power source 10 may power internal units of the vehicle 1 and/or provide power for internal usage of the vehicle 1, e.g., during a specific period of time which may overlap with power consumption of the first equipment 21.

The first equipment 21 and the second equipment 22 may be external units of the vehicle, e.g., which may attached to the vehicle 1 as modules.

The internal units and/or the internal usage of the vehicle 1 may comprise any one or more out of motors, pumps, fans, heaters, chillers, valves gearboxes, air pumps, and/or any entity enabling the vehicle to provide propulsion and driver comfort during a mission including but not limited to external energy transfer and driving.

Methods and/or embodiments herein, may be performed by a **computer system 700** and/or a **processing circuitry 702** therein.

The computer system 700 and/or the processing circuitry 702 may be comprised in the vehicle 1 or may be arranged in a remote location, e.g., in a server and/or part of a cloud service.

The computer system 700 and/or a processing circuitry 702 may be communicatively connected with any one or more out of the entities of the vehicle 1, e.g., such that it may be able to control and/or communicate using any suitable entity therein.

The computer system 700 and/or a processing circuitry 702 may be an Electronic Control Unit (ECU).

The computer system 700 and/or a processing circuitry 702 may communicate with the first equipment 21 and/or the second equipment using a **communications interface 31.**

The communications interface 31 may be any suitable communications interface, e.g., WiFi, Controller Area Network (CAN), Ethernet, radio-based, part of the PTO interface 32, powerline communications with communication over the power supply by modulating current/voltage on the PTO interface 32, etc.

In some examples, the communications interface 31 may be part of the PTO interface 32 and/or part of any other PTO interface, e.g., to the second equipment 22.

In some examples, the communications interface 31 may be a stand-alone interface such as a wire or a wireless connection to any one or more equipment powered by the power source 10, e.g., the first equipment 21 and/or the second equipment 22.

In some examples, the communications interface 31 may be wired or wireless.

In some examples, the communications interface 31 may be for providing, i.e., transmitting, one or more cost functions to an equipment powered, and/or to be powered, by the power source 10, e.g., the first equipment 21 and/or the second equipment 22, indicative of a power management condition for a time period. The power management condition may indicate power availability and/or usage of power of the power source for said time period. The respective cost functions may use a unit of price to abstract a strain, or the power availability and/or usage of power of the power source 10. For example, when the power source 10 cannot supply more power, or may risk having to reduce power supplied to other equipment when doing so, or may risk damaging part of the power source 10 when doing so, the price may be indicated to be high such as to indicate to equipment from refraining from using power, or using more power of the power source 10.

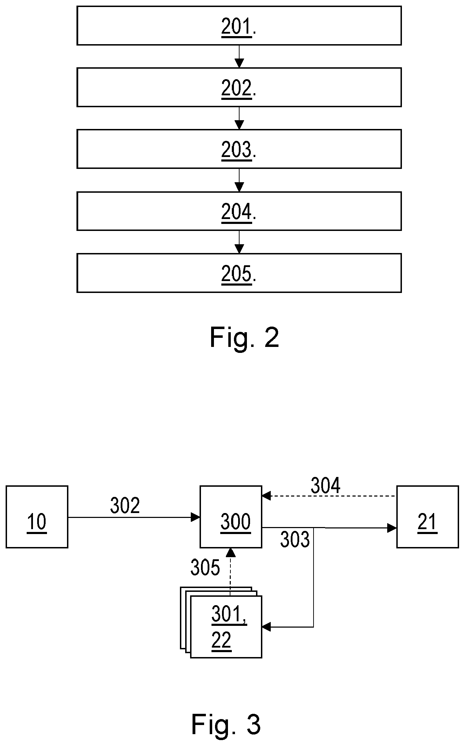

**FIG. 2** is an exemplary flow chart of a method according to an example.

The illustrated method in FIG. 2, is a computer-implemented method for handling power management of the vehicle 1. The vehicle 1 comprises the power source 10 arranged to supply power via the PTO interface 32 to the first equipment 21.

Each action of the method may be performed by the computer system 700, e.g., in particular the processing circuitry 702.

The method may comprise one or more out of the following actions, which actions may be taken in any suitable order. Some of the following actions may be optional.

### Action 201.

The method comprises obtaining a power management condition indicative of power availability and/or usage of power associated with the power source 10 for a first period of time.

In examples herein, the power source 10 is typically powering, and/or is scheduled to power internal units and/or at least one equipment, e.g., the first equipment 21 and/or the second equipment 22, during the first period of time. Internal units may be units comprised inside and/or onboard the vehicle 1, e.g., as part of a production of the vehicle 1, e.g., motors, pumps, fans, heaters, chillers, valves gearboxes, air pumps, enabling the vehicle to provide propulsion and driver comfort during a mission including but not limited to external energy transfer and driving, whereas the first equipment 21 and/or the second equipment 22 may be external to the vehicle 1 in the sense that they are connected to the vehicle 1, e.g., by the PTO interface 32 and/or may be arranged to be transported by the vehicle 1.

The power availability and/or usage of power may be a percentage or relative amounts of power that the power source 10 can safely produce during a set period of time.

The power availability and/or usage of power may be an absolute amount of power that the power source 10 can safely produce during the first period of time.

The power availability may be a power that the power source 10 may safely produce and/or supply via the PTO interface 32 e.g., during the first period of time, without risking damaging and/or inducing excessive wear the power source 10 and/or the vehicle 1.

The power availability may be a power that the power source 10 can supply via the PTO interface 32 during the first period of time without risking that power supplied to internal units and/or the second equipment 22 will be reduced by more than a threshold.

The power availability may be a power that is available to be supplied from the power source 10 for the first period of time.

The power usage may be a power that is supplied, or scheduled to be supplied, from the power source 10 for the first period of time, e.g., to any one or more out of the internal units/usages of the vehicle 1, the first equipment 21 and/or to the second equipment 22.

The first period of time may be any suitable time period, e.g., a current period of time, or a future period of time.

The first period of time may be a period of time when the first equipment 21 may wish to use power from the power source 10 and/or increase a power usage of the power source 10.

The first period of time may be a period of time when the first equipment 21 wishes to perform one or more operations.

For example, when the first equipment 21 is a fridge unit, the operation may be to use the power to cool the temperature of the fridge unit. For example, when the first equipment 21 is a pump, the operation may be to pump any fluid or gas from a source to any suitable destination.

For example, when the first equipment 21 is a concrete mixer, the operation may be to mix concrete in a container of the first equipment 21.

For example, when the first equipment 21 is a refuse collection truck comprising a lifting device and a compactor such as garbage, the operation may be to lift an object such as a garbage bin, e.g., to transfer garbage into the compactor, and/or to later compact said garbage by the compactor.

For example, when the first equipment 21 is a battery, the operation may be to charge said battery.

For example, when the first equipment 21 is an HVAC system, the operation may be to heat or cool the vehicle 1.

### Action 202.

The method comprises producing a first cost function indicative of the power management condition during the first period of time.

The first cost function may be any suitable unit such as a relative metric of power availability of the power source 10.

The first cost function may be a weighted metric.

The first cost function may be metric changing over time, i.e., a function with respect to time, and/or a constant metric for a specific period of time.

In some examples, producing the first cost function is, e.g., based on any one or more out of:
- the power availability of the power source 10 during the first period of time,
- the power usage of the power source 10 during the first period of time,
- a risk of overloading the power source 10 during the first period of time,
   - - a risk of exceeding a power and/or energy threshold of the power source during the first period of time,
- an expected adjustment in vehicle functionality caused by supplying additional power and/or energy from the power source 10 via the PTO interface 32 during the first period of time,
   - -an expected adjustment in power and/or performance for the second equipment 22 and/or for an internal unit of the vehicle 1, wherein the second equipment 22 and/or the internal unit is/are powered by the power source 10, and wherein the expected adjustment is caused by supplying additional power and/or energy from the power source via the PTO interface 32, and
- an operation to be performed by the first equipment 21, i.e., based on needed power for said operation.

In other words, the power management condition may be indicative of any one of more out of the above options of basis for producing the first cost function.

Vehicle functionality may relate to powering internal units and/or performing certain critical operations which is powered by the power source 10.

The expected adjustment in vehicle functionality caused by supplying additional power and/or energy from the power source 10 via the PTO interface 32 during the first period of time may for example be that the vehicle 1 may use power from the power source 10 for one or more operations, which used power may be reduced due to power being supplied from the power source via the PTO interface 32 during the first period of time, i.e., power sharing from the power source may dilute the power among participating units and/or power to another equipment/unit/usage may need to be prioritized.

The expected adjustment in power and/or performance for the second equipment 22 and/or for the internal unit of the vehicle 1 may be related to power used by the second equipment 22, it may need to be reduced due to additional power supplied by the power source 10.

Performance as used herein may relate to a metric quantifying work performed by the vehicle 1 over a period of time, e.g., a number of one or more critical operations, e.g., as performed by the first equipment 21 and/or the second equipment using the PTO interface 32. The one or more critical operations, and/or their respective type, may be predefined.

The first cost function may be quantified to a number, also referred to as a price or power price.

Each equipment, e.g., the first equipment 21, may have a budget associated with said price for determining whether or not the equipment may afford to request power based on the price.

The first cost function may indicate different prices for different power levels, e.g., in Watts (W), to use.

### Action 203

The method comprises providing the first cost function to the first equipment 21, or providing an indication thereof.

The first cost function may be provided to the first equipment 21 using the communications interface 31.

Providing the first cost function may comprise transmitting the first cost function to the first equipment 21.

Providing the first cost function may comprise providing, e.g., transmitting, the first cost function to the first equipment 21 and/or to one or more other equipment such as the second equipment 22.

In some examples, providing the first cost function to the first equipment 21 triggers the first equipment 21 to adapt a request for power and/or energy during the first time period.

In some examples, providing the first cost function to the first equipment 21 triggers the first equipment 21 to postpone or to prepone a planned operation, e.g., to be scheduled in a second period of time. In other words, if the first equipment had intended to use the power of the power source 10 for a first operation and if the first cost function indicates that the power of the power source 10 is scarce during the first time period, and/or using power may risk damaging the power source 10, the first equipment 21 may be triggered to schedule the operation in a later or earlier period of time, i.e., to effectively even out a power usage of the power source 10.

Postponing or preponing of the operation may be with respect to a predetermined or randomized time period for rescheduling the operation.

### Action 204.

The method may further comprise receiving a request to power the first equipment 21 via the PTO interface 32, the request being indicative of a requested power and/or energy to use for an operation by the first equipment 21.

The request may be sent subsequent to providing the first cost function according to action 203.

The request may be an allocation of power, i.e., wherein the first equipment simply will use said power, or immediately starts using said power.

The request may be a request for power which may need to be approved by a vehicle system, e.g., by the computer system 700 and/or the processing circuitry 702.

The request for power may be a request for power, e.g., to perform an operation using a set amount of power, for a second time period. The second time period being different from the first time period, i.e., after the first time period.

### Action 205.

The method may further comprise, based on the requested power and/or energy to use for the operation, e.g., as in action 204, and based on the provided first cost function, e.g., as in action 203, for a second period of time, adapting a power management policy for the vehicle 1.

The power management policy may comprise how to use, schedule and/or approve power requests of using power from the power source 10.

As an example, if the provided first cost function was above a threshold, and if the first equipment 21 subsequently requests power from the power source for the first period of time, it can be assumed that the first equipment 21 does not respect the power management condition.

The power management policy may comprise how to adapt future cost functions to provide to an equipment, such as the first equipment 21 and/or the second equipment 22.

In some examples, adapting the power management policy for the vehicle 1 comprises predicting a power and/or energy behaviour of the first equipment 21 for the second period of time. The prediction may be based on the requested power and/or energy to be used by the first equipment 21, e.g., for the first period of time, and the prediction may be based on the provided first cost function.

In other words, predicting the power and/or energy behaviour of the first equipment 21 may comprise predicting whether and/or how the first equipment 21 adapts to cost functions provided to the first equipment. The prediction may be based on a machine learning function and may be trained over a plurality of cost functions provided to the first equipment 21, and subsequent power request from the first equipment 21.

The method may further comprise adapting the power management policy based on the predicted behaviour of the first equipment 21 for the second period of time.

Adapting the power management policy may comprise ensuring that the power source always has enough power for performing an operation of the first equipment 21, e.g., with same power as previously requested by the first equipment 21.

Adapting the power management policy may comprise declining power requests from other equipment or internal units/usages.

Adapting the power management policy may comprise increasing a metric for a subsequent cost function for a subsequent time period, such that equipment that does adapt its behaviour according to provided cost functions may avoid requesting power and/or postpone and/or prepone requesting power if possible.

In some examples, predicting the power and/or energy behaviour of the first equipment 21 for the second period of time is further based on an obtained urgency factor relating to the operation of the requested power and/or energy to use, e.g., for the first time period.

For example, the first equipment 21 may have had some urgent operation to perform which could not be postponed or preponed. In these situations, the behaviour of the first equipment 21 may be assumed to still respect the provided cost functions except if there is an urgent operation. Such urgent operations may be periodical, which may be taken into account when adapting the power management policy.

An urgent operation of examples herein may for example be when the first equipment 21 is a fridge unit, and when the temperature of the fridge unit increase above a threshold or is expected to increase above a threshold, e.g., above a temperature required to fulfil when transporting food items or medical items, then the first equipment may need to, despite the first cost function, always try to power the fridge unit to cool its respective temperature.

When the first equipment 21 is a refuse truck, an urgent operation may be to lift a garbage bin not to delay an operation. A non-urgent operation may be to compact the garbage as it can be performed at any suitable time as long as there is room in the compactor.

A non-urgent operation of examples herein may always be postponed or preponed, and should be so if the first cost function is above a threshold. If the first equipment 21 does not postpone or prepone a non-urgent operation, then the behaviour of the first equipment 21 may be predicted to be that it will not change behavior based on provided cost functions and hence, the power management policy may need to be adapted such as to buffer power for the first equipment 21 and/or decline power requests from other equipment, e.g., the second equipment 22, and/or subsequent cost functions may need to be increased with a coefficient based on the behaviour of the first equipment 21.

An urgent operation of examples herein may be operating a lift, e.g., when the first equipment 21 and/or the second equipment 22 is a lift.

An urgent operation of examples herein may be pumping water, e.g., when the first equipment 21 and/or the second equipment 22 is a water pump arranged in a fire truck.

A non-urgent operation of examples herein may be to run one or more compressors when the first equipment 21 and/or the second equipment 22 is a fridge unit, to cool the fridge unit unless the temperature is above a threshold.

A non-urgent operation of examples herein may be to provide electricity to charge a battery, e.g., when the first equipment 21 and/or the second equipment 22 is a battery for a trailer attached to the vehicle 1, e.g., at least when a battery level, such as a state of charge, of the battery is above a threshold.

Rotating/running a cement mixer may be a non-urgent or an urgent operation, e.g., when the first equipment 21 and/or the second equipment 22 is a cement mixer, e.g., depending on a rate of rotation of the cement mixer over a period of time. I.e., rotating the cement mixer is urgent but the rate of rotation may be reduced for a limited time period.

**FIG. 3** is an exemplary block diagram according to an example scenario.

The power source 10 may **provide 302** power capabilities to a power management controller 300. The **power management controller 300** may be the computer system 700 and/or the processor circuitry 702 therein. The power capabilities may be indicative of the power management condition, e.g., as obtained in action 201.

The power management controller 300 may **transmit 303** to the first equipment 21 a price for power of the power source 10 for an example time period, such as the first period of time, e.g., as in producing and providing the first cost function of actions 202-203 above. In other words, the price transmitted 303 may be a cost function such as the first cost function.

Transmitting 303 the price for power of the power source 10 for the example time period may comprise also transmitting the price for power to the second equipment 22 and/or to **other power consumers 301.** The other power consumers 301 may be any entities, users, and/or units that may consume power from the power source 10.

In some examples, based on the transmitted 303 price, the first equipment 21 will determine whether or not the first equipment 21 shall **request 304** power from the power management controller 300, which would then supply power from the power source 10. When determining whether or not the first equipment 21 shall request 305 power, the price may be compared with a predefined budget for the first equipment 21. I.e., if the first cost function is abstracted as a price, or using any other unit, the first equipment 21 may have a corresponding budget to determine whether or not it can afford to request power.

Accordingly, in some examples, based on the transmitted 303 price, the second equipment 22 and/or the other power consumers 301 may determine whether or not to **request 305** power from the power management controller 300, which would then supply power from the power source 10.

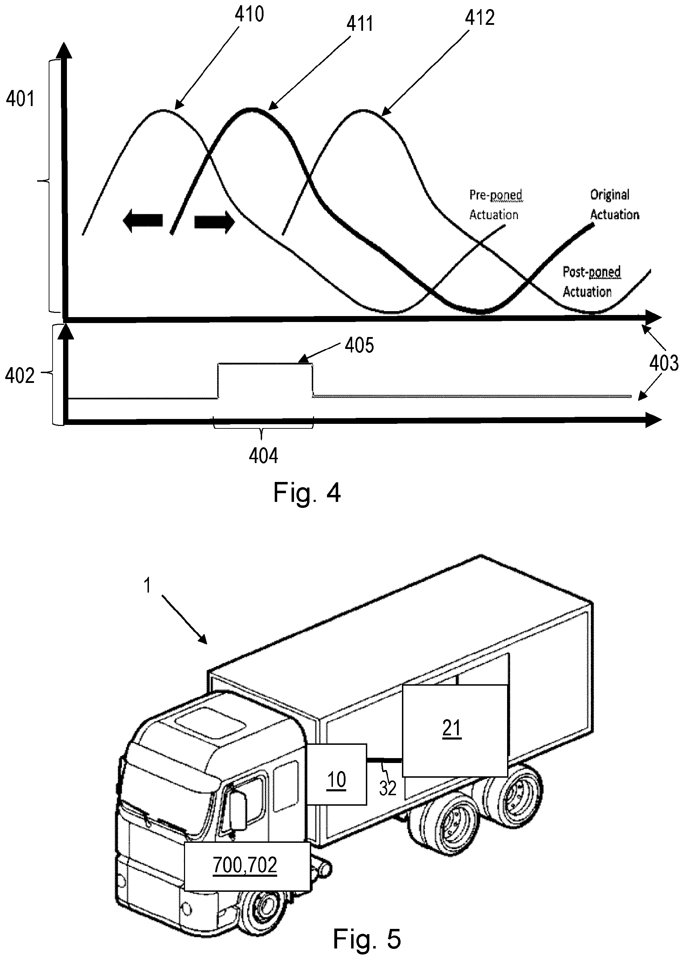

**FIG. 4** is an exemplary line diagram according to an example.

An **X-axis 403** illustrates time, comprising **a time period 404,** e.g., the first period of time of actions above.

A **first Y-axis 401** illustrates a power consumption from the first equipment 21.

A **second Y-axis 402** illustrates a price of power, i.e., a metric of the first cost function of the actions described above.

**Original operation 411** illustrates a power usage over time for an operation of the first equipment 21, e.g., as intended if performed.

The first equipment 21 may obtain, e.g., as provided by action 303, an indication of a **first cost function 405** being above a threshold during the time period 404.

Since the first cost function 405 is above said threshold, it is suitable for the first equipment 21 to either prepone the original operation 411 as illustrated by **a preponed operation 410,** or to postpone the operation as illustrated by a **postponed operation 412.** As illustrated, postponing or preponing the original operation 411, this moves the peak power consumption of the original operation to not conflict with when the first cost function is high.

In an example scenario when the first equipment 21 is a fridge unit the first equipment 21 may be responsible for cooling a temperature within a certain time window by using power of the power source 10. To perform this task, the first equipment 21 may control a cooling element to run with a higher or lower power, or be turned off completely. If power is cheap, i.e., the first cost function is below a threshold, the first equipment 21 may actuate the cooling element earlier and/or more often to have a margin for when the power becomes expensive and it would lower the cooling effect or shut off the power due to the first cost function being above a threshold.

### Further variations and/or examples

In some examples, there is a vehicle power management controller, e.g., the computer system 700 and/or the processing circuitry 702, that comprises an actual and/or predicted power availability and planned usage of the power source 10. The power management controller may calculate a power usage price, e.g., the first cost function of actions above, with regards to a prediction window, e.g., the first and/or second period of time, based on the predicted available power in the system, e.g., the power management condition of action 201. The predicted price may, with some time horizon(s), e.g., the first and/or second period of time, may be sent to an equipment, e.g., the first equipment 21, through an existing communication interface, e.g., the communications interface 31, e.g., as in action 203. The equipment, e.g., the first equipment 21, may use this information to plan its power usage by, preponing or postponing actuation of operations that require more than a threshold of power.

The equipment, e.g., the first equipment 21, may reply with a power request to the vehicle 1 and/or the power management controller. The power request may be used for power management, e.g., as in action 205. This request may for example indicate information about predicted future power use as well to give a vehicle controller, e.g., the power management controller, more information.

Equipment power usage, e.g., of the first equipment 21 and/or of the second equipment 22, may be categorized into two main types, continuous power and transient power usage. The continuous power may change with different operating modes and/or performed operations. For certain types of equipment e.g., the first equipment 21 and/or of the second equipment 22, the timing of the switching between operating modes and transient power use can be controlled so that it is activated earlier or later in time.

In an equipment having both transient power usage and continuous power usage, the transient power usage may be substantially higher than the continuous power usage and hence the transient power usage may have a large implication on a power balance. As an example, a starting current for an electrical machine is substantially higher than its continuous current during operation.

Vehicle power management controller, e.g., the computer system 700 and/or the processing circuitry 702, may calculate a power price, e.g., with some time prediction of a period of time, based on on-board and/or offboard vehicle data. This may be the production of the first cost function of action 202.

The price, e.g., the first cost function, may be sent to relevant equipment, e.g., the first equipment 21 and/or of the second equipment 22, via a communication interface, e.g., the communications interface 31. The equipment e.g., the first equipment 21 and/or of the second equipment 22, may use the received information to prepone or postpone actuation, or put itself into a lower power mode, e.g., based on the power usage price and predicted power usage on the equipment side. The equipment e.g., the first equipment 21 and/or of the second equipment 22, may further inform, allocate or request the vehicle power management controller what power it is requesting to use.

One scenario may comprise the following Steps 1-4 in any suitable order. Steps 1-4 may be combined with actions 201-205 above in any suitable manner.

Step 1: The power management controller calculates a power price based on vehicle data, e.g., comprising the power management condition, e.g., as part of actions 201 and/or 202.

The power price may be different for different intendent operations and/or based on different intended power levels to used, which may be indicated as part of the power price, e.g., the first cost function.

Step 2: The power management controller sends the power usage price to equipment e.g., the first equipment 21 and/or of the second equipment 22, e.g., as part of action 203.

Together with Step 1, Step 2 may be periodic and/or triggered on any suitable event.

Step 3: Based on the power price, e.g., the first cost function, the equipment e.g., the first equipment 21 and/or of the second equipment 22, e.g., determines whether or not to request power and/or what power to request. This step may be optional, the equipment may also proceed to just use power based on the power price.

Step 4: The power management controller allocates power according to the request. This step may be optional depending on whether allocation by the power management controller is necessary.

Furthermore, A machine learning model may be trained on how the equipment, e.g., the first equipment 21 and/or the second equipment 22, respond(s) to the power price, e.g., whether or not they will adjust a behavior or if the equipment(s) e.g., the first equipment 21 and/or the second equipment 22, will continue to request power even if the power price is high, e.g., above a threshold. The machine learning model may or may not comprise a neural network.

The machine learning model may be trained to increase the price based on the adjusted behavior, and/or to adjust a power usage of the power source 10 and/or to adjust a power management policy, e.g., as in action 205.

**FIG. 5** is another view of **FIG. 1****,** according to an example.

The computer system 700 comprising processing circuitry 702 configured to handle power management of the vehicle 1 is provided. The vehicle 1 comprises the power source 10 arranged to supply power via the PTO interface 32 to the first equipment 21.

The computer system 700 is further configured to obtain a power management condition indicative of power availability and/or usage of power associated with the power source 10 for a first period of time.

The computer system 700 is further configured to produce a first cost function indicative of the power management condition during the first period of time.

The computer system 700 is further configured to provide, e.g., transmit, the first cost function to the first equipment 21.

The computer system of FIG. 5 may be combined with the examples of the method according to FIG. 2 and actions 201-205, in any suitable manner.

The computer system of FIG. 5 may be combined with the example features of the vehicle 1 according to FIG. 1 in any suitable manner.

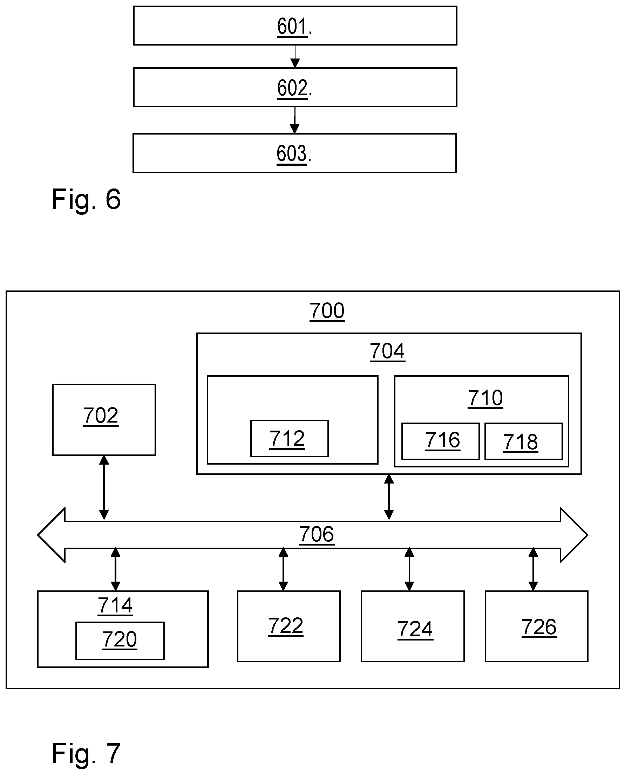

**FIG. 6** is a flow chart of an exemplary method to according to an example.

The illustrated method in FIG. 6, is a computer-implemented method for handling power management of the vehicle 1.

The method of FIG. 6 may be combined with the examples of the method according to FIG. 2 and actions 201-205, in any suitable manner.

The method of FIG. 6 may be combined with the example features of the vehicle 1 according to FIG. 1 in any suitable manner.

The vehicle 1 comprises the power source 10 arranged to supply power via the PTO interface 32 to the first equipment 21.

### Action 601.

The method comprises: by the processing circuitry 702 of the computer system 700, obtaining a power management condition indicative of power availability and/or usage of power associated with the power source 10 for a first period of time.

### Action 602.

The method comprises: by the processing circuitry 702, producing a first cost function indicative of the power management condition during the first period of time.

### Action 603.

The method comprises: by the processing circuitry 702, providing the first cost function to the first equipment 21.

**FIG. 7** is a schematic diagram of the computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN, an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include the processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired, e.g., the communications interface 31.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a number of Examples which may be combined with any of the above examples in any suitable manner.

Example 1. A computer system 700 comprising processing circuitry 702 configured to handle power management of a vehicle 1, wherein the vehicle 1 comprises a power source 10 arranged to supply power via a Power Take-Off, PTO, interface 32 to a first equipment 21, the computer system 700 further being configured to:
- obtain a power management condition indicative of power availability and/or usage of power associated with the power source 10 for a first period of time,
- produce a first cost function indicative of the power management condition during the first period of time, and
- provide, e.g., transmit, the first cost function to the first equipment 21.

Example 2. The computer system 700 of Example 1, wherein the processing circuitry 702 is further configured to produce the first cost function based on an expected adjustment in vehicle functionality caused by supplying power and/or energy from the power source 10 to the first equipment 21 via the PTO interface 32 during the first period of time.

Example 3. The computer system 700 of any of Examples 1-2, wherein the processing circuitry 702 is further configured to produce the first cost function based on an expected adjustment in power and/or performance for a second equipment 22 and/or for an internal unit of the vehicle 1, wherein the second equipment 22 and/or the internal unit is/are powered by the power source 10, wherein the expected adjustment is caused by supplying power and/or energy from the power source 10 to the first equipment 21 via the PTO interface 32.

Example 4. The computer system 700 of Examples 1-3, wherein the processing circuitry 702 is further configured to produce the first cost function based on a risk of exceeding a power threshold and/or energy threshold of the power source 10 during the first period of time.

Example 5. The computer system 700 of any of Examples 1-4, wherein the processing circuitry 702 is further configured to produce the first cost function based on an operation to be performed by the first equipment 21.

Example 6. The computer system 700 of any of Examples 1-5, wherein the processing circuitry 702 is further configured to:
- receive a request to power the first equipment 21 via the PTO interface 32, the request being indicative of a requested power and/or energy to use for an operation by the first equipment 21, and
- based on the requested power and/or energy to use for the operation and based on the provided first cost function, for a second period of time, adapt a power management policy for the vehicle 1.

Example 7. The computer system 700 of Example 6, wherein the processing circuitry 702 is further configured to adapt the power management policy for the vehicle 1 by:
- predicting a power behaviour and/or energy behaviour of the first equipment 21 for the second period of time, based on the requested power and/or energy to use, and based on the provided first cost function, and to:
- adapt the power management policy based on the predicted behaviour of the first equipment 21 for the second period of time.

Example 8. The computer system 700 of Example 7, wherein the processing circuitry 702 is further configured to predict the power behavior and/or energy behaviour of the first equipment 21 for the second period of time further based on an obtained urgency factor relating to the operation of the requested power and/or energy to use.

Example 9. A vehicle 1 comprising the computer system 700 according to any of Examples 1-8.

Example 10. The vehicle according to Example 9, wherein the vehicle 1 comprises a power source 10 arranged to supply power via a Power Take-Off, PTO, interface 32 to a first equipment 21.

Example 11. The vehicle according to any of Examples 9 or 10 wherein the first equipment 21 is any of a fridge unit, a concrete mixer, or a pump, and wherein the power supplied by the power source 10 via the PTO interface 32 is electrical energy or torque.

Example 12. A computer-implemented method, for handling power management of a vehicle 1, wherein the vehicle 1 comprises a power source 10 arranged to supply power via a Power Take-Off, PTO, interface 32 to a first equipment 21, the method comprising:
- by a processing circuitry 702 of a computer system 700, obtaining 201, 601 a power management condition indicative of power availability and/or usage of power associated with the power source 10 for a first period of time,
- by the processing circuitry 702, producing 202, 602 a first cost function indicative of the power management condition during the first period of time,
- by the processing circuitry 702, providing 203, 603 the first cost function to the first equipment 21.

Example 13. The method of Example 12, wherein producing 202 the first cost function is based on any one or more out of:
- an expected adjustment in vehicle functionality caused by supplying power and/or energy from the power source 10 to the first equipment 21 via the PTO interface 32 during the first period of time,
- an expected adjustment in power and/or performance for a second equipment 22 and/or for an internal unit of the vehicle 1, wherein the second equipment 22 and/or the internal unit is/are powered by the power source 10, and wherein the expected adjustment is caused by supplying power and/or energy from the power source 10 to the first equipment 21 via the PTO interface 32,
- a risk of exceeding a power threshold and/or energy threshold of the power source 10 during the first period of time, and
- an operation to be performed by the first equipment 21.

Example 14. The method of any of Examples 12-13, wherein the method further comprises:
- by the processing circuitry 702, receiving 204 a request to power the first equipment 21 via the PTO interface 32, the request being indicative of a requested power and/or energy to use for an operation by the first equipment 21,
- by the processing circuitry 702, based on the requested power and/or energy to use for the operation and based on the provided first cost function, for a second period of time, adapting 205 a power management policy for the vehicle 1.

Example 15. The method of Example 14 , wherein adapting 205 the power management policy for the vehicle comprises:
- predicting a power and/or energy behaviour of the first equipment 21 for the second period of time, based on the requested power and/or energy to use, and based on the provided first cost function, and
- wherein adapting 205 the power management policy is based on the predicted behaviour of the first equipment 21 for the second period of time;

Example 16. The method of Example 15, wherein predicting the power and/or energy behaviour of the first equipment 21 for the second period of time is further based on an obtained urgency factor relating to the operation of the requested power and/or energy to use.

Example 17. The method of any of Examples 12-16, wherein providing 203 the first cost function to the first equipment 21 triggers the first equipment 21 to adapt a request for power and/or energy during the first time period.

Example 18. The method of any of Examples 12-17, wherein providing 203 the first cost function to the first equipment 21 triggers the first equipment 21 to postpone or to prepone a planned operation.

Example 19. A computer program product comprising program code for performing, when executed by the processing circuitry 702, the method of any of Examples 11-18.

Example 20. A non-transitory computer-readable storage medium comprising instructions, which when executed by the processing circuitry, cause the processing circuitry 702 to perform the method of any of Examples 11-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (700) comprising processing circuitry (702) configured to handle power management of a vehicle (1), wherein the vehicle (1) comprises a power source (10) arranged to supply power via a Power Take-Off, PTO, interface (32) to a first equipment (21), the computer system (700) further being configured to:
- obtain a power management condition indicative of power availability and/or usage of power associated with the power source (10) for a first period of time,
- produce a first cost function indicative of the power management condition during the first period of time, and
- provide the first cost function to the first equipment (21).

2. The computer system (700) of claim 1, wherein the processing circuitry (702) is further configured to produce the first cost function based on an expected adjustment in vehicle functionality caused by supplying power and/or energy from the power source (10) to the first equipment (21) via the PTO interface (32) during the first period of time.

3. The computer system (700) of any of claims 1-2, wherein the processing circuitry (702) is further configured to produce the first cost function based on an expected adjustment in power and/or performance for a second equipment (22) and/or for an internal unit of the vehicle (1), wherein the second equipment (22) and/or the internal unit is/are powered by the power source (10), wherein the expected adjustment is caused by supplying power and/or energy from the power source (10) to the first equipment (21) via the PTO interface (32).

4. The computer system (700) of claims 1-3, wherein the processing circuitry (702) is further configured to produce the first cost function based on a risk of exceeding a power threshold and/or energy threshold of the power source (10) during the first period of time.

5. The computer system (700) of any of claims 1-4, wherein the processing circuitry (702) is further configured to produce the first cost function based on an operation to be performed by the first equipment (21).

6. The computer system (700) of any of claims 1-5, wherein the processing circuitry (702) is further configured to:
- receive a request to power the first equipment (21) via the PTO interface (32), the request being indicative of a requested power and/or energy to use for an operation by the first equipment (21), and
- based on the requested power and/or energy to use for the operation and based on the provided first cost function, for a second period of time, adapt a power management policy for the vehicle (1).

7. The computer system (700) of claim 6, wherein the processing circuitry (702) is further configured to adapt the power management policy for the vehicle (1) by:
- predicting a power behaviour and/or energy behaviour of the first equipment (21) for the second period of time, based on the requested power and/or energy to use, and based on the provided first cost function, and to:
- adapt the power management policy based on the predicted behaviour of the first equipment (21) for the second period of time.

8. The computer system (700) of claim 7, wherein the processing circuitry (702) is further configured to predict the power behavior and/or energy behaviour of the first equipment (21) for the second period of time further based on an obtained urgency factor relating to the operation of the requested power and/or energy to use.

9. A vehicle (1) comprising the computer system (700) according to any of claims 1-8.

10. The vehicle according to claim 9, wherein the vehicle (1) comprises a power source (10) arranged to supply power via a Power Take-Off, PTO, interface (32) to a first equipment (21).

11. The vehicle according to any of claims 9 or 10 wherein the first equipment (21) is any of a fridge unit, a concrete mixer, a battery, or a pump, and wherein the power supplied by the power source (10) via the PTO interface (32) is electrical energy or torque.

12. A computer-implemented method, for handling power management of a vehicle (1), wherein the vehicle (1) comprises a power source (10) arranged to supply power via a Power Take-Off, PTO, interface (32) to a first equipment (21), the method comprising:
- by a processing circuitry (702) of a computer system (700), obtaining (201, 601) a power management condition indicative of power availability and/or usage of power associated with the power source (10) for a first period of time,
- by the processing circuitry (702), producing (202, 602) a first cost function indicative of the power management condition during the first period of time,
- by the processing circuitry (702), providing (203, 603) the first cost function to the first equipment (21).

13. The method of claim 12, wherein producing (202) the first cost function is based on any one or more out of:
- an expected adjustment in vehicle functionality caused by supplying power and/or energy from the power source (10) to the first equipment (21) via the PTO interface (32) during the first period of time,
- an expected adjustment in power and/or performance for a second equipment (22) and/or for an internal unit of the vehicle (1), wherein the second equipment (22) and/or the internal unit is/are powered by the power source (10), and wherein the expected adjustment is caused by supplying power and/or energy from the power source (10) to the first equipment (21) via the PTO interface (32),
- a risk of exceeding a power threshold and/or energy threshold of the power source (10) during the first period of time, and
- an operation to be performed by the first equipment (21).

14. A computer program product comprising program code for performing, when executed by the processing circuitry (702), the method of any of claims 11-13.

15. A non-transitory computer-readable storage medium comprising instructions, which when executed by the processing circuitry, cause the processing circuitry (702) to perform the method of any of claims 11-13.
